# EUROPEAN PATENT APPLICATION

(11) **EP 4 258 399 A1**
(43) Date of publication of application: **11.10.2023**
(21) Application number: 22215594.7
(22) Date of filing: 21.12.2022
(51) Int. Cl.: H01M 10/04, H01M 50/533, H01M 50/536, H01M 50/538

(54) **CURRENT COLLECTING MEMBER, BATTERY AND BATTERY MANUFACTURING METHOD**

(30) Priority: 07.04.2022 CN 202210363401; 07.04.2022 CN 202210363386
(71) Applicant: AESC Japan Ltd., Kanagawa, 2520012 (JP)
(72) Inventor: CHE, Peipei, Wuxi City, Jiangsu Province (CN)
(74) Representative: Becker, Eberhard

(57) **Abstract**

The disclosure belongs to the technical field of secondary batteries, and discloses a current collecting member, a battery and a battery manufacturing method. The current collecting member includes a connecting structure (1), the connecting structure (1) includes a through groove (11), the through groove (11) extends along the length direction of the connecting structure (1), and the edge of the through groove (11) is provided with a protrusion (111). The structural strength of the main body of the current collecting member of the present disclosure is high.

## Description

### BACKGROUND

### Technical Field

The present disclosure relates to the technical field of secondary batteries, and in particular, to a current collecting member, a battery and a battery manufacturing method.

### Description of Related Art

The development of electric vehicles is inseparable from the performance improvement of power batteries. In the power battery, the cell assembly as the core of energy supply has received a lot of attention accordingly. In order to meet the performance requirements of electric vehicles for power batteries in all aspects, many factors such as safety, cost, and lifespan need to be taken into consideration in the making of the cell assembly while satisfying the requirement of energy density.

In the cell assembly, active materials are coated on current collectors such as pole pieces to generate current and output the current. The multi-layer pole pieces are stacked or wound to form an electrode assembly and connected with the current collecting member, so that the current generated by the electrode assembly is collected by the current collecting member and transmitted to the pole rod, and then output to an electrical terminal through the pole rod. Existing current collecting member is normally provided with a through groove on the main body to achieve the purpose of reducing production costs, but opening the through groove on the main body of the current collecting member is to cut off part of the main body plate that is originally integral, which weakens the strength of the main body structure, and therefore the service life of the current collecting member is affected.

### SUMMARY

The purpose of the present disclosure is to provide a current collecting member, a battery and a battery manufacturing method, so as to solve the problem of poor structural strength after the current collecting member is opened with a through groove.

To achieve the above purpose, the present disclosure adopts the following technical solutions:

In a first aspect, a current collecting member is provided, including:

A connecting structure includes a through groove. The through groove extends along the length direction of the connecting structure, and a protrusion is provided along the outer circumference of the through groove.

In some embodiments, the current collecting member satisfies at least one of the following conditions (a) to (f): (a) the current collecting member further includes a lead-out structure, and the connecting structure is perpendicular or substantially perpendicular to the lead-out structure; (b) the protrusion is a continuous protrusion or a segmented protrusion distributed along the outer circumference of the through groove; (c) an area ratio of the through grooves to the connecting structure is 0.1 to 0.5; (d) a length ratio of the through groove to the connecting structure is 0.3 to 0.9; (e) the connecting structure further has a protection member, and the protection member wraps the edge of the connecting structure in the length direction; (f) an accommodating groove is provided on one surface of the connecting structure, and the accommodating groove extends along the edge of the connecting structure in the length direction.

In some embodiments, the protrusion protrudes in a direction away from the lead-out structure, and one surface of the protrusion facing the lead-out structure is correspondingly provided with a recess.

In some embodiments, the connecting structure and the lead-out structure are integrally formed.

In some embodiments, the material of the protection member includes any one of polypropylene, polyethylene terephthalate, or polyimide.

In some embodiments, a thickness ratio of the accommodating groove to the connecting structure is 1/10 to 2/3.

In some embodiments, the accommodating groove penetrates the connecting structure along the length direction of the connecting structure.

In a second aspect, a battery is provided, which includes the above current collecting member. The battery further includes an electrode assembly and a housing. The connecting structure is provided at one end of the electrode assembly in the length direction, and is parallel or substantially parallel to one side surface of the electrode assembly in the thickness direction, that is, an electrode assembly side surface. The electrode assembly has a tab portion, the tab portion is formed by electrical connection of a plurality of single-piece tabs, and the tab portion is in contact with one surface of the connecting structure. The through groove may be used for tooling and inserting with the current collecting member.

In some embodiments, there are two groups of the electrode assemblies, and the respective tab portions of the two groups of the electrode assemblies are bent respectively and extended in opposite directions and are in contact with one of the connecting structures.

In some embodiments, the tab portion has a protection member which is at least partially located between the connecting structure and the tab portion.

In a third aspect, a battery manufacturing method is provided, which uses a current collecting member tooling to manufacture the above battery. The current collecting member tooling includes an insertion portion and a supporting portion that are perpendicular to each other. The battery manufacturing method includes the following steps: a positioning step, in which the insertion portion of the current collecting member tooling is inserted into the through groove of the connecting structure; a bending step, in which part of the tab portion of the electrode assembly is bent; a connecting step, in which the tab portion is connected and fixed with the connecting structure.

In some embodiments, in the positioning step, one surface of the supporting portion abuts against the connecting structure, and the other side abuts against the side surface of the electrode assembly, so that the supporting portion of the current collecting member tooling is located between the side surface of the electrode assembly and the connecting structure.

In some embodiments, in the bending step, the tab portion is bent at two edges of the connecting structure in the length direction and is in contact with one surface of the connecting structure.

In some embodiments, in the bending step, the surfaces of the two electrode assemblies in the length direction are disposed opposite to each other, and the tab portions of the two groups of the electrode assemblies are bent respectively at two edges of one connecting structure in the length direction and are in contact with one surface of the electrode assembly.

In some embodiments, in the connecting step, a portion of the tab portion connected to the connecting structure is fixed by laser welding.

In some embodiments, a tab pre-processing step is further included before the bending step. After a plurality of the single-piece tabs are electrically connected, a fusion body is cut to form the tab portion.

In some embodiments, in the tab pre-processing step, the electrical connection of the plurality of single-piece tabs is performed by ultrasonic pre-welding or thermal pressing.

In some embodiments, in the bending step, there are two current collecting member toolings. Two groups of current collecting member toolings are connected through a current collecting member tooling bottom plate, and a current collecting member is inserted correspondingly in each group of current collecting member tooling.

Advantageous effects of the present disclosure are as follows:
The current collecting member of the present disclosure is provided with protrusions on the edge of the through groove, so that the current collecting member is work-hardened, has high structural strength, has better fatigue resistance during the actual use of the battery, enhances the welding reliability of the tab and the current collecting member, and has a long service life.

The battery of the present disclosure includes an electrode assembly, a housing and the above current collecting member. The overall structure of the battery is stable and the use stability is strong, which facilitates to improve the performance of the battery.

In the battery manufacturing method of the present disclosure, the current collecting member tooling is used to manufacture the above battery. The current collecting member tooling and the connecting structure are easy to assemble, able to stably support the connecting structure of the current collecting member, improve the welding efficiency, and reduce the welding defect rate.

### BRIEF DESCRIPTION OF THE DRAWINGS

FIG. 1 is a schematic structural view of a battery according to an embodiment of the present disclosure.
FIG. 2 is a front view of the battery according to an embodiment of the present disclosure.
FIG. 3 is a cross-sectional view taken along the direction A-A of FIG. 2.
FIG. 4 is a partial enlarged schematic view of position A in FIG. 3.
FIG. 5 is a schematic structural view of a current collecting member according to an embodiment of the present disclosure.
FIG. 6 is a schematic structural view of the current collecting member according to an embodiment of the present disclosure (including a protection member).
FIG. 7 is a partial enlarged schematic view of position B in FIG. 6.
FIG. 8 is a front view of the current collecting member according to the embodiment of the present disclosure (including a protection member).
FIG. 9 is a schematic structural view of the current collecting member according to an embodiment of the present disclosure (without a protection member).
FIG. 10 is a partial enlarged schematic view of position C in FIG. 9.
FIG. 11 is a schematic structural view of a protrusion of the current collecting member in the form of the first segmented protrusion.
FIG. 12 is a schematic structural view of a protrusion of the current collecting member in the form of the second segmented protrusion.
FIG. 13 is a schematic view of assembly of a current collecting member tooling and the current collecting member.
FIG. 14 is a schematic view of structural assembly of the current collecting member and the electrode assembly, and the current collecting member tooling.
FIG. 15 is a sectional view taken along the direction B-B of FIG. 14.
FIG. 16 is a partial enlarged schematic view of position D in FIG. 15.

### DESCRIPTION OF THE EMBODIMENTS

Embodiments of the present disclosure are described in detail below, examples of which are illustrated in the accompanying drawings, wherein the same or similar reference numerals refer to the same or similar parts or parts having the same or similar functions throughout. The embodiments described below with reference to the accompanying drawings are exemplary, and are intended to explain the present disclosure and should not be construed as limiting the present disclosure.

In the description of the present disclosure, unless otherwise expressly specified and limited, the terms "connected", "linked" and "fixed" should be understood in a broad sense, for example, the terms may refer to a fixed connection, a detachable connection, a mechanical connection, an electrical connection, a direct connection, or an indirect connection through an intermediate medium, and may refer to an internal connection between two elements or an interaction relationship between the two elements. For those of ordinary skill in the art, the specific meanings of the above terms in the present disclosure can be understood according to specific situations.

In the description of the present disclosure, unless otherwise expressly specified and limited, a first feature being "on" or "under" a second feature may mean that the first feature and the second feature are in direct contact, or may mean that the first feature and the second feature are not in direct contact but in contact through another feature between them. Also, the first feature being "above", "over" and "on" the second feature means that the first feature is directly above and obliquely above the second feature, or simply means that the first feature is horizontally higher than the second feature. The first feature being "below", "under" and "underneath" the second feature means that the first feature is directly below and obliquely below the second feature, or simply means that the first feature is horizontally lower than the second feature.

In the description of this embodiment, the directional terms "upper", "lower", "right", etc. are the orientation or positional relationship shown in the accompanying drawings, which are only for convenience of description and simplified operation, rather than indicating or imply that the device or element referred to must have a particular orientation, be constructed and operated in a particular orientation, and therefore should not be construed as limiting the disclosure. In addition, the terms "first" and "second" are only used for distinction in description, and have no special meaning.

In the present disclosure, the battery may include a lithium-ion primary battery, a lithium-ion secondary battery, a lithium-sulfur battery, a sodium-lithium-ion battery, a sodium-ion battery, or a magnesium-ion battery, etc., which are not limited in the embodiments of the present disclosure.

The technical solutions described in the embodiments of the present disclosure are all applicable to various devices using batteries, such as electric vehicles, ships, and spacecraft. Spacecraft, for example, further includes airplanes, space shuttles, and spaceship. It should be understood that the technical solutions described in the embodiments of the present disclosure are not only applicable to the above-described devices, but can also be applied to all devices that use batteries as power. However, for brevity of description, the following embodiments are all described by taking a secondary battery used as a battery pack of an electric vehicle as an example. Multiple batteries in a battery pack can be connected in series, in parallel, or a mix of serial and parallel connection.

The technical solutions of the present disclosure are further described below with reference to the accompanying drawings and through specific embodiments.

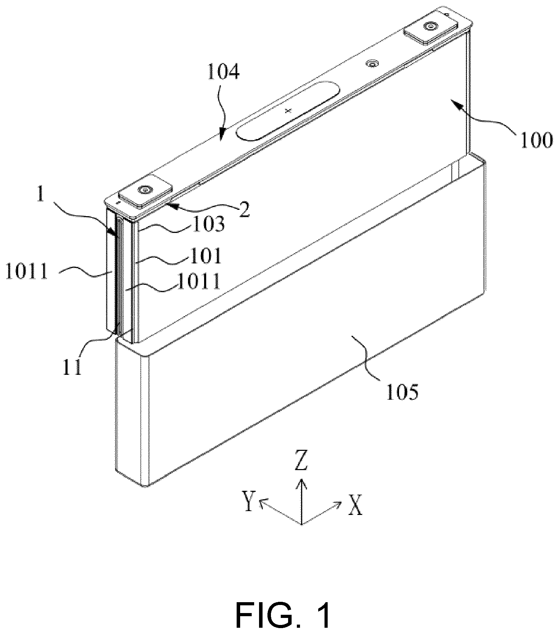

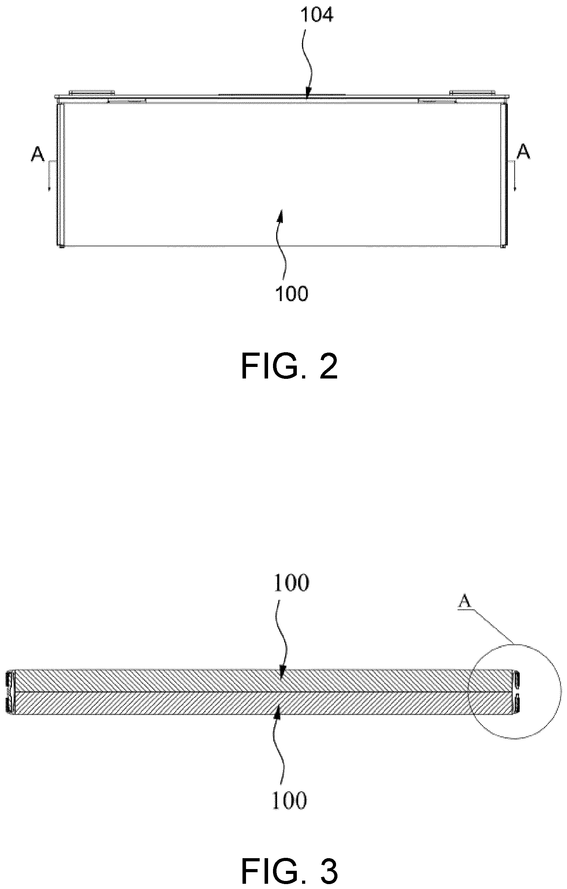

According to one of the embodiments of the present disclosure, a battery is provided. FIG. 1 is a schematic structural view of a battery according to an embodiment of the present disclosure, and FIG. 2 shows a front view of the battery according to an embodiment of the present disclosure. As shown in FIG. 1 and FIG. 2, the battery is a square battery, which mainly includes an electrode assembly 100, a cover plate assembly 104 and a housing 105. The electrode assembly 100 is the main charging and discharging element, and the housing 105 protects the electrode assembly 100. The housing 105 is a square housing with an open top and a cavity inside. Although a rectangular parallelepiped is illustrated in FIG. 1, it goes without saying that other polygonal shapes such as a square may be adopted. The cover plate assembly 104 is a substantially rectangular plate that matches the shape of the opening of the housing 105 so as to be able to engage with the housing 105 to seal the cavity. The cover plate assembly 104 and the housing 105 may be joined by means of laser welding or the like. The cover plate assembly 104 has a pole rod and an explosion-proof valve. In the cover plate assembly 104 shown in FIG. 1, the pole rod is arranged at both ends of the cover plate assembly 104 and is in a substantially square shape, and the explosion-proof valve is arranged in the middle of the cover plate, forming into a long bar with arc-shaped ends. Those skilled in the art may also freely set the positions and shapes of the pole rod and the explosion-proof valve according to actual needs, an electrode assembly 100 is provided in the cavity of the housing 105, and the electrode assembly 100 is assembled by a plurality of pole pieces. The main body of a single pole piece is typically a rectangular metal sheet, and at least one short side of the pole piece is also formed with a small protruding part as a single-piece tab. The electrode assembly 100 is formed by winding or stacking a plurality of pole piece bodies. Under the circumstances, the single-piece tab of each pole piece are also stacked and arranged together. The plurality of single-piece tabs are fused into a whole body by ultrasonic welding or hot pressing, and serve as the tab portion 101 of the electrode assembly 100. The shape of the main body of the electrode assembly 100 is not particularly limited, as long as the main body matches the shape of the housing in which the main body is accommodated and is easy for stacking and organized arrangement, so as to ensure a high space utilization rate inside the housing. In the present embodiment, the electrode assembly 100 exemplified as a substantially cubic shape such as a prolate shape that matches the housing 105, but the electrode assembly 100 may also be in a substantially cylindrical shape or the like. Furthermore, since the tab portion 101 is formed by fusing a plurality of single-piece tabs, the structure thereof is relatively fragile. Therefore, a protection member 1011 may be provided on the tab portion 101, and the protection member 1011 may be made of any one of polypropylene, polyethylene terephthalate or polyimide, and may be sleeved on the front end of the tab portion 101, and may also be connected to the tab portion 101 in other forms, so that the protection member 1011 at least partially wraps the tab portion 101. As shown in FIG. 1, taking the protection member 1011 sleeved on the tab portion 101 as an example, when the tab portion 101 and the connecting structure 1 are welded, since the protection member 1011 is sleeved on the front end of the tab portion 101, the tab portion 101 is welded and fixed to the connecting structure 1 through the protection member 1011, so that the welding process is not directly performed on the tab portion 101. In this way, it is possible to effectively prevent the tab portion 101 from being damaged due to high temperature/high pressure of welding.

When the battery is assembled, the prolate electrode assembly 100 is erected and placed into the cavity of the housing 105. In this state, the direction X in the coordinate axis of FIG. 1 is the length direction of the electrode assembly 100, the direction Y is the thickness direction of the electrode assembly 100, and the direction Z is the width direction of the electrode assembly 100. Current collecting members are assembled at both ends of the electrode assembly 100 in the length direction, and are placed in the cavity of the housing 105 together with the electrode assembly 100. The current collecting member is made of conductive material, usually metal, and is fixed and in contact with the cell assembly 100 and the cover plate assembly 104 respectively, so that the cell assembly 100 and the cover plate assembly 104 may be electrically connected. More specifically, the tab portion 101 of the cell assembly 100 may be electrically connected to the pole rod of the cover plate assembly 104. In this manner, after the current generated in the cell assembly 100 flows into the tab portion 101, the current is further collected by the current collecting member and transmitted to the pole rod of the cover plate assembly 104, and then output from the pole rod to the outside to realize the power supply function of the battery.

Taking the laminated electrode assembly as an example, the electrode assembly 100 includes a tab portion 101 extending along both ends of the length of the electrode assembly 100, and the tab portion 101 includes a positive tab extending along one end of the electrode assembly 100 in the length direction and a negative tab extending along the other end of the electrode assembly 100 in the length direction.

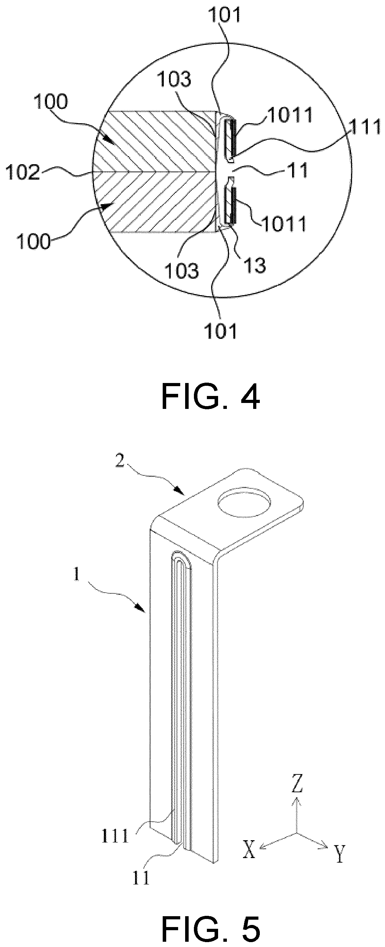

FIG. 3 is a cross-sectional view taken along the direction A-A of FIG. 2, that is, a top view of the electrode assembly 100 of the housing 105 in FIG. 2. As shown in FIG. 3, two electrode assemblies 100 are provided in the housing 105, and the two electrode assemblies 100 are closely arranged along the thickness direction. Current collecting members are respectively disposed at both ends of the electrode assembly 100, so that one current collecting member is connected to two electrode assemblies 100. FIG. 4 shows a partially enlarged schematic view of a position near one end of the electrode assembly 100 in FIG. 3. As shown in FIG. 4, at one end of the two electrode assemblies 100 in the length direction arranged in contact with each other, their respective tab portions 101 are respectively drawn out in the same direction along one long side which they are not in contact with. The lead-out tab portion 101 is bent at the connecting structure 1 assembled at the end of the electrode assembly 100, so that the bent tab portion 101 is in contact with one surface of the connecting structure 1, and the connecting structure 1 and the electrode assembly 100 are located on the same side of the bent tab portion 101. The tab portions 101 at one end of the two electrode assemblies 100 are bent inward respectively from both sides in the width direction of the connecting structure 1, that is, the two tab portions 101 at one end of the electrode assemblies 100 are bent respectively. The electrode assemblies 100 provided in the housing 105 are not limited to those shown above, and there may be only one electrode assembly or more than three electrode assemblies. When there is only one electrode assembly 100 in the housing 105, the tab portion 101 is bent from one surface in the width direction of the connecting structure 1 and contacts one surface of the connecting structure 1 facing away from the electrode assembly 100.

FIG. 5 shows a schematic structural diagram of a current collecting member according to an embodiment of the present disclosure, and the current collecting member will be described below with reference to FIG. 5. As shown in FIG. 5, the current collecting member is a metal sheet in a substantially "L" shape, including a connecting structure 1 and a lead-out structure 2 that are perpendicular or substantially perpendicular to each other. The direction X, the direction Y and the direction Z shown in the coordinate of FIG. 5 respectively correspond to the thickness direction, the width direction and the length direction of the connecting structure 1. The connecting structure 1 and the lead-out structure 2 are formed by bending a long strip at 90 degrees or substantially 90 degrees. It is exemplified here that the connecting structure 1 and the lead-out structure 2 are integrally formed to facilitate mass production. Of course, the connecting structure 1 and the lead-out structure 2 may be welded as two separate parts as required, which is not limited here.

The length of the connecting structure 1 should match the width of the electrode assembly 100, so that the connecting structure 1 may be arranged to match the end of the electrode assembly 100. The size of the lead-out structure 2 is not particularly limited. FIG. 5 shows that the lead-out structure 2 is opened with a circular hole, which may be assembled with the pole rod on the cover plate assembly 104 to allow the lead-out structure 2 to be electrically connected to the pole rod of the cover plate assembly 104. The main body of the connecting structure 1 is provided with a through groove 11 along the length direction. The length of the through groove 11 is less than the length of the main body of the connecting structure 1, and one end of the through groove 11 penetrates the bottom side in the Z direction of the connecting structure 1, so that the current collecting member tooling may be inserted into the groove through the bottom side of the connecting structure 1. By arranging the through groove 11 on the current collecting member, the use of material may be effectively reduced, the weight of the current collecting member may be reduced, and the production cost may be decreased.

In some embodiments, the area ratio of the through groove 11 to the connecting structure 1 is 0.1 to 0.5, and may fall within a range of an interval between any two of 0.1, 0.4, or 0.5. In this embodiment, the area ratio of the through grooves 11 to the connecting structure 1 is shown as 0.1. This area ratio facilitates the reduction of the weight of the main body of the connecting structure 1 and the reduction of manufacturing costs. The area ratio greater than 0.5 results in limited connection area of the connecting structure 1, the area for conduction is small, and the overcurrent is limited, making it difficult to perform high-rate charging and discharging.

The length ratio of the through groove 11 to the connecting structure 1 is 0.3 to 0.9, and may fall within a range of an interval between any two of 0.3, 0.5, 0.7, or 0.9. In this embodiment, the length ratio of the through groove 11 to the connecting structure 1 is shown as 0.9. This length ratio facilitates the assembly of the through groove 11, and it is possible to avoid that the connecting structure 1 is not stressed uniformly during the assembly process due to the insufficient length of the through groove 11.

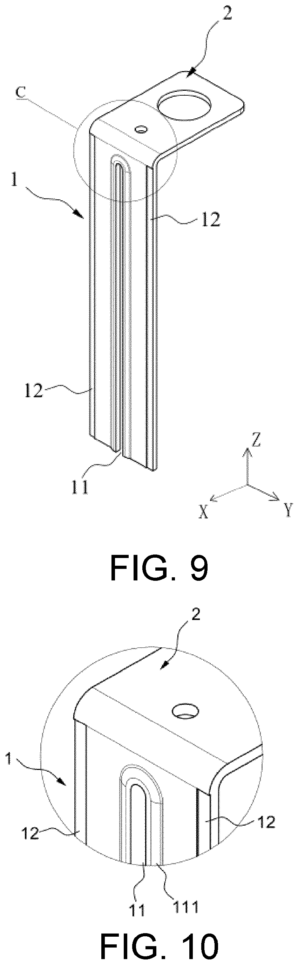

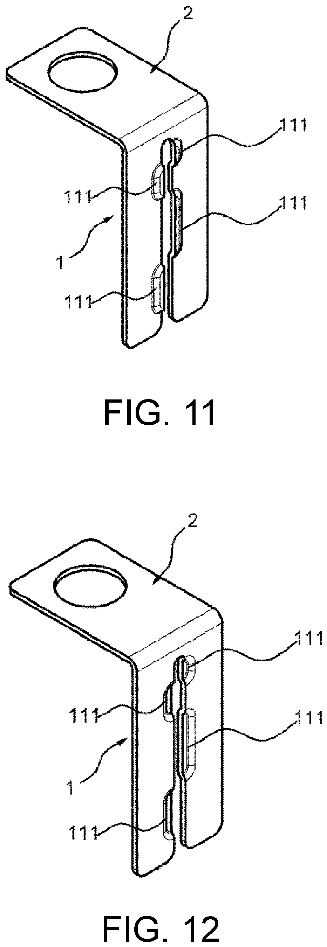

In the meantime, at one surface in the direction X of the current collecting member, a protrusion 111 is provided along the outer circumference of the through groove 11. The protrusion 111 is formed by punching the outer peripheral part of the through groove 11 to make the planar plate protrude to one side. In this embodiment, the protrusion 111 encloses the entire through groove 11. It goes without saying that those skilled in the art may also provide a segmented protrusion 111 locally on the outer circumference of the through groove 11 as required. FIG. 9 and FIG. 10 show that the protrusions 111 in this embodiment are continuous protrusions distributed around the outer circumference of the through groove 11. FIG. 11 and FIG. 12 show that the protrusions 111 are discontinuous segmented protrusions provided on the outer circumference of the through groove 11. The protruding direction of the protrusions 111 may be either in the same direction or opposite to the bending direction of the lead-out structure 2. The lengths and distribution positions of the segmented protrusions may be selected according to actual needs, and protrusions 111 with any cross-sectional shape, continuous or segmented protrusions all fall within the scope to be protected by the present disclosure, and are not limited to this embodiment.

By providing the protrusion 111 on the connecting structure 1, the strength problem caused by the hollow structure of the through groove 11 in the connecting structure 1 may be effectively compensated, and the structural strength of the current collecting assembly is improved, so that the current collecting assembly may have reduced weight and decreased cost while ensuring the strength of the assembly, and the performance of various aspects may be ensured.

When the tab portion 101 is in contact with the connecting structure 1, the protrusion 111 can limit the position of the tab portion 101. To understand the position-limiting effect of the protrusion 111 on the tab portion 101, please refer to FIG. 4. FIG. 4 shows a partially enlarged schematic view of the position A in FIG. 3. The horizontal direction in FIG. 4 is the length direction of the electrode assembly 100, and the vertical direction is the thickness direction of the electrode assembly 100. When the tab portion 101 is bent inward from the outer side in the width direction of the electrode assembly 100, since the protrusion 111 is formed around the through groove 11 and protrudes from one surface of the electrode assembly 100, the bent tab portion 101 extending along one surface of the connecting structure 1 will be blocked by the protrusion 111 protruding from the side, so that the tab portion 101 stops extending and is limited in position. Since the through groove 11 is provided at the center of the width direction of the connecting structure 1, the protrusions 111 are also uniformly arranged on both sides of the through groove 11, so that the extension length of the tab portion 101 on one surface of the connecting structure 1 may be the same, and the two sides are symmetrical with respect to the through groove located on the center line, which avoids difference in lengths of the two tab portions after bending, and the connection effect will not be affected.

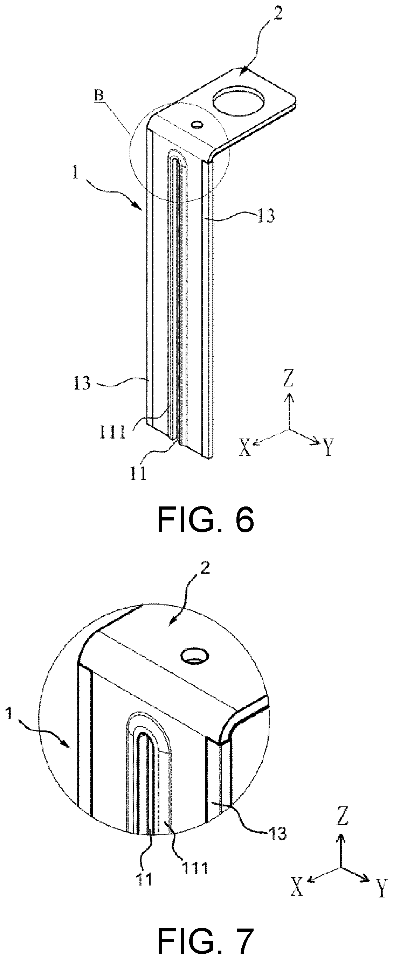

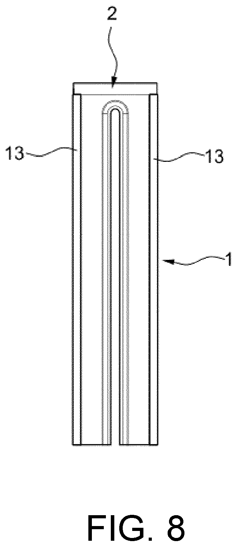

In some embodiments, the current collecting member further includes a protection member 13. As shown in FIG. 6 to FIG. 8, FIG. 6 shows a schematic structural view of a current collecting member (including a protection member) according to an embodiment of the present disclosure, FIG. 7 shows a partial enlarged schematic view of position B in FIG. 6, and FIG. 8 shows a front view of the current collecting member (including the protection member) according to an embodiment of the present disclosure. The direction X, the direction Y and the direction Z shown in FIG. 6 and FIG. 7 are the thickness direction of the connecting structure 1, the width direction of the connecting structure 1 and the length direction of the connecting structure 1, respectively. As shown in FIG. 6, the protection member 13 wraps both sides of the connecting structure 1 in the length direction. The purpose is that, when the electrode assembly 100 is assembled with the current collecting member, the tab portion 101 is bent from the edges of the two long sides of the connecting structure 1. That is to say, the edge of the metal current collecting member will contact and rub against the tab portion 101, which is likely to cause wear to the fragile tab portion 101. Therefore, in order to protect the tab portion 101 and prevent damage to the tab due to long-term wear and tear at the bending portion in circumstances such as transportation and use where bumping is likely to take place, the long edge side of the connecting structure 1 is wrapped and provided with the protection member 13 to mitigate the wear between the tab portion 101 and the connecting structure 1. The protection member 13 is normally made of soft polypropylene, polyethylene terephthalate or polyimide. In this embodiment, the protection member 13 wraps the entire long side of the connecting structure 1, that is, the length of the protection member 13 is equal to the length of the connecting structure 1, so as to ensure that the protection member 13 can completely wrap the long edge side of the connecting structure 1. Of course, the length of the protection member 13 may also be set according to specific needs, which will not be described in details here.

Furthermore, as shown in FIG. 9 to FIG. 10, FIG. 9 shows a schematic structural view of the current collecting member (without the protection member) according to an embodiment of the present disclosure, and FIG. 10 shows a partial enlarged schematic view of position C in FIG. 9. The direction X, the direction Y and the direction Z shown in FIG. 9 are the thickness direction of the connecting structure 1, the width direction of the connecting structure 1, and the length direction of the connecting structure 1, respectively. The connecting structure 1 of the current collecting member is provided with an accommodating groove 12 at the edges of the two long sides, and the accommodating grooves 12 are parallel to the long sides of the connecting structure 1. The accommodating groove 12 is opened on one surface of the connecting structure 1 away from the electrode assembly 100. Optionally, the accommodating groove 12 may extend through the connecting structure 1 along the length direction of the connecting structure 1. The thickness ratio of the depth of the accommodating groove 12 (that is, the depth of the groove in the direction X in FIG. 9) to the thickness of the connecting structure 1 (that is, the thickness of a planar plate position along the direction X of the connecting structure 1 in FIG. 5, not the protruding position) is 1/10 to 2/3. By arranging the accommodating groove 12, the edge thickness dimension of the connecting structure 1 may be partially reduced, and the use of materials may be reduced. More importantly, when the tab portion 101 is bent along the long side of the connecting structure 1, the shallow groove structure of the accommodating groove 12 may reduce the total thickness dimension of the bent portion of the tab portion 101 and the connecting structure 1, that is, the thickness of the contact portion between the tab portion 101 and the connecting structure 1 is reduced, which allows the assemblies inside the battery to be arranged in a more compact manner, thereby improving the volumetric energy density of the battery. It should be noted here that if the depth of the accommodating groove 12 is too deep, both ends in the width direction of the connecting structure 1 will become thinner, which will affect the structural strength of the connecting structure 1. However, if the depth of the accommodating groove 12 is too shallow, it is difficult to effectively reduce the total thickness of the bending portion of the tab portion 101 along the connecting structure 1. Therefore, the ratio of the depth of the accommodating groove 12 to the thickness of the connecting structure 1 may be within a range of an interval between any two of 0.1, 0.2, 0.5 or 2/3.

The protection member 13 and the accommodating groove 12 may also be used in combination. For example, the protection member 13 wrapping the long side of the connecting structure 1 is completely filled in the accommodating groove 12. It can be understood that, since the protection member 13 can serve the function of protecting the tab portion 101, the wear between the tab portion 101 and the connecting structure 1 is reduced. However, in the meantime, the protection member 13 has a certain thickness, which causes a negative effect on the energy density. Therefore, by providing the accommodating groove 12 and making its depth greater than or equal to the thickness of the protection member 13, the protection member 13 is filled into the accommodating groove 12 so that the protection member 13 does not protrude from the surface of the connecting structure 1. In this manner, in addition to achieve the effects of reducing wear and prolonging service life for the tab portion 101, there is no adverse effect on the total thickness of the current collecting member or even the energy density.

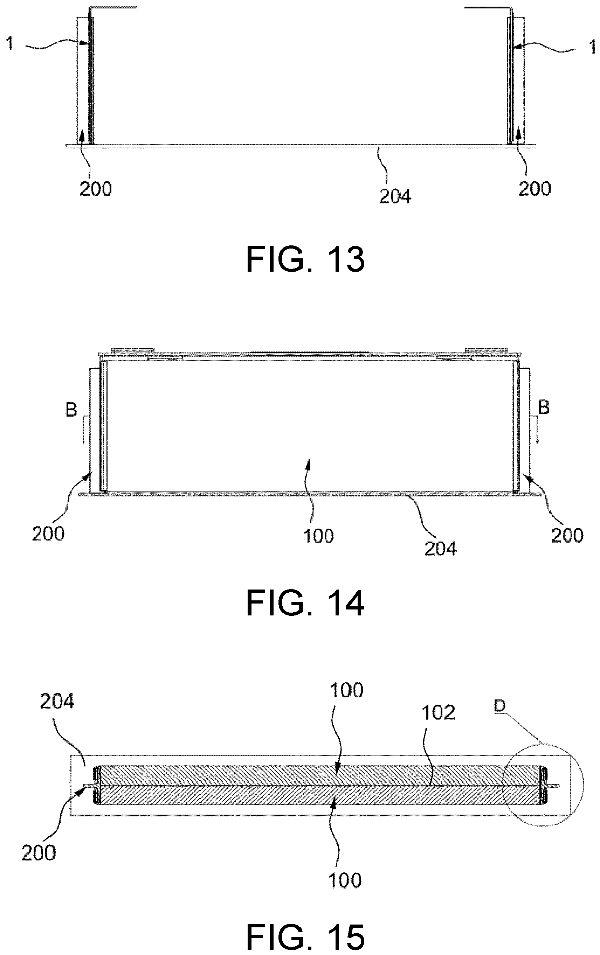

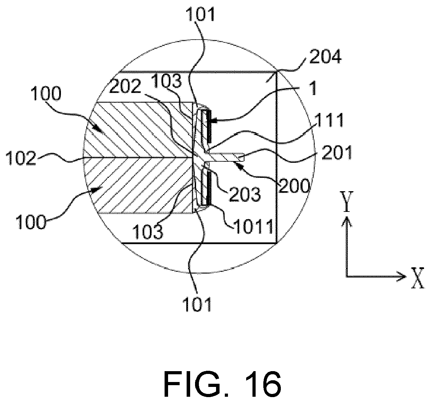

During the manufacturing process of the battery, the current collecting member tooling 200 needs to be adopted to work with the current collecting member to complete the manufacturing and assembly of the battery. The connecting structure 1 is supported by the current collecting member tooling 200. The current collecting member tooling 200 in this embodiment is a tooling with a T-shaped cross section, and includes an inserting portion 201 and a supporting portion 202 that are vertically connected. The through groove 11 on the connecting structure 1 of the current collecting member may be inserted and fitted with the current collecting member tooling 200, and the insertion and assembling of the current collecting member tooling 200 and the through groove 11 is shown in the schematic view of FIG. 13. FIG. 13 and FIG. 14 show a schematic view of the assembly of the current collecting member tooling and the current collecting member. As shown in FIG. 13 and FIG. 14, during assembly, the current collecting member tooling 200 is inserted from the bottom of the through groove 11 until the top of the current collecting member tooling 200 abuts against the top of the through groove 11. For the connection and assembly of the through groove 11, the current collecting member tooling 200 and the electrode assembly 100, further reference may be made to FIG. 15 and FIG. 16. FIG. 15 shows a cross-sectional view in the direction B-B in FIG. 14, and FIG. 16 shows a partial enlarged schematic view of position D in FIG. 15. The direction X shown in FIG. 16 is the length direction of the electrode assembly 100, and the direction Y is the thickness direction of the electrode assembly 100. The connecting structure 1 may stably cooperate with the mechanism of the current collecting member tooling 200 through the through groove 11 to ensure the flatness of the connecting structure 1 during the welding process, as well as the final welding effect of the tab portion 101 and the connecting structure 1. The through groove 11 may reduce weight and cost. The supporting portion 202 may be inserted into and connected with the through groove 11 to assist in supporting the connecting structure 1, ensure the flatness of the connecting structure 1, and improve the welding effect of the tab portion 101 and the connecting structure 1. It can be understood that when the tab portion 101 is bent to one surface of the connecting structure 1 away from the electrode assembly 100, the tab portion 101 and the connecting structure 1 need to be connected through a welding process.

In some embodiments, the protruding direction of the protrusion 111 faces one surface away from the lead-out structure 2, and one surface of the protrusion 111 close to the lead-out structure 2 is provided with a recess. It can be understood that the protrusions 111 in this embodiment are formed by stamping, one surface thereof is a protruding structure, and the other side thereof is a corresponding recess structure. The protrusions 111 may also be thin-walled protrusions, which helps to save materials.

Referring to FIG. 16, a protrusion portion 203 is provided at the connection between the insertion portion 201 of the current collecting member tooling 200 and the supporting portion 202. When the insertion portion 201 is inserted into the through groove 11 of the connecting structure 1, the recess of the protrusion 111 facing the electrode assembly 100 may abut against the protrusion portion 203 to assist in cooperating and positioning the connecting structure 1. The opposite sides in the thickness direction (horizontal direction in FIG. 16) of the supporting portion 202 are respectively attached to the connecting structure 1 and the extension portion of the tab portion 101 along the thickness direction of the electrode assembly 100. Therefore, the recess structure may also serve a positioning function when the connecting structure 1 is assembled with the current collecting member tooling 200. In this embodiment, a slit width and length of the through groove 11 are related to the size of the insertion portion 201 to ensure stable insertion between the insertion portion 201 and the through groove 11. The surface of one side of the supporting portion 202 that is attached to the connecting structure 1 is flat to ensure the flatness of the connecting structure 1 after insertion.

According to one of the embodiments of the present disclosure, a battery manufacturing method is also provided, which adopts the current collecting member tooling 200 to manufacture the above-mentioned battery, and the current collecting member tooling 200 may be inserted into and assembled with the connecting structure 1, and includes an insertion portion 201 and a supporting portion 202 that are vertically connected. The insertion portion 201 is inserted into and assembled with the connecting structure 1, and the battery manufacturing method includes the following steps:

As shown in FIG. 13, in the positioning step, the insertion portion 201 is inserted from the bottom of the through groove 11 of the connecting structure 1 until the top of the current collecting member tooling 200 abuts against the top of the through groove 11. The supporting portion 202 is connected between the connecting structure 1 and the electrode assembly 100, so that the insertion portion 201 of the current collecting member tooling 200 is inserted into and assembled with the through groove 11.

As shown in FIG. 15 and FIG. 16, in the bending step, the tab portion 101 of the electrode assembly 100 is bent. In this step, two current collecting member toolings 200 are provided, and the current collecting member toolings 200 are respectively located at both ends of the electrode assembly 100 in the length direction. The two current collecting member toolings 200 are connected through a current collecting member tooling bottom plate 204, and a current collecting member is correspondingly inserted on each current collecting member tooling 200. The tab portions 101 of the electrode assembly 100 wind around the current collecting member tooling 200 and the connecting structure 1 and are bent respectively, so that a part of the tab portion 101 faces one surface of the connecting structure 1 facing away from the electrode assembly 100.

In the connecting step, the tab portion 101 is fixed to and connected with one surface of the connecting structure 1 facing away from the electrode assembly 100. In this step, the connection method of the tab portion 101 and the connecting structure 1 may adopt laser welding for fixing, laser welding has a fast welding speed and high machining accuracy. In addition, the connection between the tab portion 101 and the connecting structure 1 may also be performed by a connection method other than resistance welding such as ultrasonic welding and soldering, which is not limited to what is described in this embodiment.

In some embodiments, in the bending step, the electrode assembly 100 may be provided with two groups. Two first side surfaces 102 of the two groups of electrode assemblies 100 are disposed opposite to each other (the first side surface 102 is a surface of the electrode assembly 3 in the length direction). The tab portion 101 of one group of electrode assemblies 100 are drawn out in a direction facing away from the other group of electrode assemblies 100. The tab portion 101 of the two groups of electrode assemblies 100 are bent respectively around two ends of the connecting structure 1 in the width direction, so that the two tab portions 101 are disposed on one surface of the connecting structure 1 away from the electrode assembly 100. One current collecting member is correspondingly connected to the two tab portions 101 at the same end of the two groups of electrode assemblies 100.

In some embodiments, before the bending step, the method further at least includes performing pre-processing of tab on the multi-layer single-piece tabs of the tab portion 101, so that the multi-layer single-piece tabs are integrated to form the tab portion 101. It can be understood that the tab portion 101 is formed by integrating multi-layer single-piece tabs, and before the tab portion 101 is bent, pre-treatment of tab needs to be performed on the multi-layer single-piece tabs. The pre-processing method of the tabs includes performing ultrasonic pre-welding or hot pressing on the multi-layer single-piece tabs, and then cutting the length of the processed multi-layer single-piece tabs, so that the multi-layer single-piece tabs may be formed into the tab portion 101. The lengths of the tab portions 101 are selected according to actual requirements, which are not specifically limited in this embodiment.

## Claims

1. A current collecting member, comprising:
a connecting structure (1) comprising a through groove (11), wherein the through groove (11) extends along a length direction of the connecting structure (1), and a protrusion (111) is provided along an outer circumference of the through groove (11).

2. The current collecting member according to claim 1, wherein the current collecting member satisfies at least one of the following conditions (a) to (f):
(a) the current collecting member further comprises a lead-out structure (2), and the connecting structure (1) is perpendicular or substantially perpendicular to the lead-out structure (2);
(b) the protrusion (111) is a continuous protrusion or a segmented protrusion distributed along the outer circumference of the through groove (11);
(c) an area ratio of the through groove (11) to the connecting structure (1) is 0.1 to 0.5;
(d) a length ratio of the through groove (11) to the connecting structure (1) is 0.3 to 0.9;
(e) the connecting structure (1) further has a protection member (13), and the protection member (13) wraps an edge of the connecting structure (1) in the length direction;
(f) an accommodating groove (12) is provided on one surface of the connecting structure (1), and the accommodating groove (12) extends along the edge of the connecting structure (1) in the length direction.

3. The current collecting member according to claim 1 or 2, wherein the protrusion (111) protrudes in a direction away from the lead-out structure (2).

4. The current collecting member according to any one of claims 1 to 3, wherein the connecting structure (1) and the lead-out structure (2) are integrally formed.

5. The current collecting member according to any one of claims 1 to 4, wherein a material of the protection member (13) comprises any one of polypropylene, polyethylene terephthalate, and polyimide.

6. The current collecting member according to any one of claims 1 to 5, wherein a thickness ratio of the accommodating groove (12) to the connecting structure (1) is 1/10 to 2/3.

7. The current collecting member according to any one of claims 1 to 6, wherein the accommodating groove (12) penetrates the connecting structure (1) along the length direction of the connecting structure (1).

8. A battery, comprising the current collecting member as claimed in any one of claims 1 to 7, wherein the battery further comprises an electrode assembly (100) and a housing (105), the connecting structure (1) is provided at one end of the electrode assembly (100) in a length direction, and is parallel or substantially parallel to one side surface (103) of the electrode assembly (100) in a thickness direction, the electrode assembly (100) has a tab portion (101), the tab portion (101) is formed by electrical connection of a plurality of single-piece tabs, and the tab portion (101) is in contact with one surface of the connecting structure (1).

9. The battery according to claim 8, wherein there are two groups of the electrode assemblies (100), and the respective tab portions (101) of the two groups of the electrode assemblies (100) are bent respectively and are in contact with the one surface of one of the connecting structures (1).

10. The battery according to claim 8 or 9, wherein the tab portion (101) has a protection member (1011) which is at least partially located between the connecting structure (1) and the tab portion (101).

11. A battery manufacturing method, which uses a current collecting member tooling (200) to manufacture the battery as claimed in any one of claims 8 to 10, wherein the current collecting member tooling (200) comprises an insertion portion (201) and a supporting portion (202) that are perpendicular to each other, and the battery manufacturing method comprises the following steps:
a positioning step, in which the insertion portion (201) of the current collecting member tooling (200) is inserted into the through groove (11) of the connecting structure (1);
a bending step, in which a part of the tab portion (101) of the electrode assembly (100) is bent;
a connecting step, in which the tab portion (101) is connected and fixed with the connecting structure (1).

12. The battery manufacturing method according to claim 11, wherein in the positioning step, one surface of the supporting portion (202) abuts against the connecting structure (1), and the other surface abuts against a side surface (103) of the electrode assembly (100), so that the supporting portion (202) of the current collecting member tooling (200) is located between the side surface (103) of the electrode assembly (100) and the connecting structure (1).

13. The battery manufacturing method according to claim 11 or 12, wherein in the bending step, the tab portion (101) is bent at two edges of the connecting structure (1) in the length direction and is in contact with the one surface of the connecting structure (1).

14. The battery manufacturing method according to any one of claims 11 to 13, wherein in the bending step, surfaces of the two groups of the electrode assemblies (100) in the length direction are disposed opposite to each other, and the tab portions (101) of the two groups of the electrode assemblies (100) are bent respectively at two edges of one of the connecting structures (1) in the length direction and are in contact with one surface of the electrode assembly (100).

15. The battery manufacturing method according to any one of claims 11 to 14, wherein in the connecting step, a portion of the tab portion (101) connected to the connecting structure (1) is fixed by laser welding.

16. The battery manufacturing method according to any one of claims 11 to 15, wherein a tab pre-processing step is further comprised before the bending step, after the plurality of the single-piece tabs are electrically connected, a fusion body is cut to form the tab portion (101).

17. The battery manufacturing method according to any one of claims 11 to 16, wherein in the tab pre-processing step, the electrical connection of the plurality of single-piece tabs is performed by ultrasonic pre-welding or thermal pressing.
